(19) Europäisches Patentamt
European Patent Office
Office européen des brevets

(11) Publication number: 0 311 371 A2

(12) **EUROPEAN PATENT APPLICATION**

(21) Application number: 88309271.0

(51) Int. Cl.4: C08G 8/04 , C08K 5/00

(22) Date of filing: 05.10.88

(30) Priority: 05.10.87 IE 2653/87

(43) Date of publication of application: 12.04.89 Bulletin 89/15

(84) Designated Contracting States: AT BE CH DE ES FR GB GR IT LI LU NL SE

(71) Applicant: LOCTITE (IRELAND) Ltd.
Whitestown Industrial Estate
Tallaght, Co. Dublin 24(IE)

(72) Inventor: Guthrie, John
14 Woodlands
Naas Co. Kildare(IE)
Inventor: Woods, John
138, Stillorgan Wood Upper Kilmacud Road
Stillorgan Co. Dublin(IE)
Inventor: Kneafsey, Brendan J.
31, West Park
Tallaght Dublin 24(IE)
Inventor: MacAogain, Conor
44, Edmondstown Green
Rathfarnham Dublin 14(IE)

(74) Representative: Marchant, James Ian et al
Elkington & Fife Beacon House 113 Kingsway
London WC2B 6PP(GB)

(54) **Cationically curable compositions.**

(57) Cationically curable compositions comprise:

A (i) phenols and phenoxy silyl ethers of the formula

I 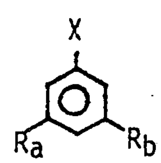

wherein $R_a$ and $R_b$ (which may be the same or different) are H or an ortho, para directing activating group for aromatic electrophilic substitution, other than an amine; provided that $R_a$ and $R_b$ are not both H;
X is hydroxy or

EP 0 311 371 A2

Xerox Copy Centre

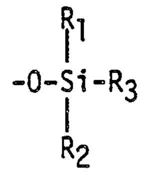

wherein $R_1$ and $R_2$ are H, hydrocarbyl having 1-5 carbon atoms, or aryl
$R_3$ is H, hydrocarbyl, aryl, hydrocarbylaryl or a halogen-substituted derivative thereof;

A (ii) phenol ethers of the formula

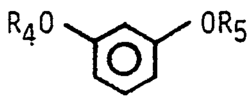

II

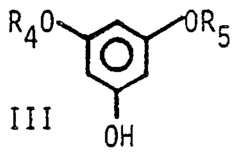

III

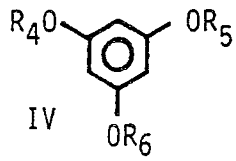

IV

wherein $R_4$, $R_5$ and $R_6$ which may be the same or different are hydrocarbyl, aryl, hydrocarbylaryl, or a substituted derivative thereof;

A (iii) ethers of hydroquinone of the formula

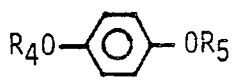

V

wherein $R_4$ and $R_5$ are as defined above;

A (iv) substituted phenol ethers of the formula

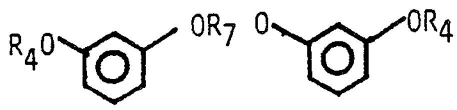

VI

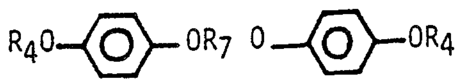

VII

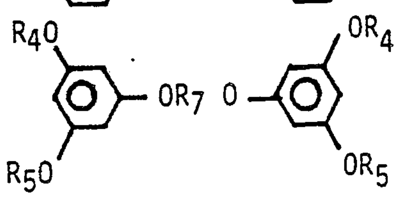

VIII

wherein $R_4$ and $R_5$ are as defined above
and $R_7$ is -C(O)-NH-$R_8$-NH-C(O)-
or -C(O)-$R_8$-C(O)-
wherein $R_8$ is a divalent aliphatic, cycloaliphatic or aromatic group;

A (v) phenolic compounds of the formula

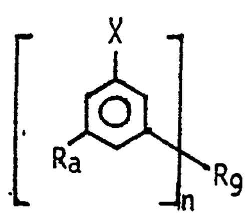

IX

wherein $R_a$ and X are as defined herein
$R_a$ is an n-valent radical and $2 \leqq n \leqq 4$
a compound B selected from

B (i) formaldehyde; and compounds capable of producing formaldehyde in the presence of an acid;

B (ii) monofunctional aldehydes other than formaldehyde; and compounds capable of producing such aldehydes in the presence of acid

B (iii) multi-functional aldehydes; and compounds capable of producing such aldehydes in the presence of acid;

a compound C which is a latent acid catalyst, activatable by radiation, heat or moisture. The compositions can be stored and applied (for example in coatings, sealants and adhesives) in the liquid condition, and then cured directly to a solid condition.

## CATIONICALLY CURABLE COMPOSITIONS

The present invention relates to cationically curable compositions, particularly liquid phenol/aldehyde compositions which are suitable for application as coatings, sealants and adhesives.

Phenolic resins, also known as phenol-formaldehyde resins, have been known for many years. They are prepared by a condensation reaction between phenol and formaldehyde at the *ortho* and/or *para* positions to the phenolic hydroxy group, which reaction provides a low molecular weight prepolymer (novolac), which is subsequently cross linked by addition of further formaldehyde together with acid and/or heat in a separate step to form a solid product. However the condensation reaction is a relatively complex one, and the prepolymers are generally viscous resins or crystalline solids which are difficult to handle without added solvent.

European Patent Specification No. 0,010,897 A2 discloses the photocationic polymerization of compositions comprising *inter alia* phenolic resins, a photosensitive aromatic halonium salt and a material which under conditions of photopolymerization will yield a sufficient proportion of free radicals. However this process starts with a conventional phenolic resin.

U.S. Patent 4,640,937 Hanyuda describes a resinous composition of modified phenolic compounds comprising a phenolic compound and an unsaturated cycloacetal, the composition being curable with active energy rays in the presence of an onium salt. However compositions based on such modified phenolic compounds are of limited interest because they are cross linked by reaction of the unsaturated groups on the unsaturated cycloacetal and not by phenol/aldehyde reaction.

The present inventors have now provided compositions of certain phenols and aldehydes which can be cured directly from a monomeric to a cross-linked condition.

The present invention provides a cationically curable composition comprising a compound A selected from

A (i) phenols and phenoxy silyl ethers of the formula

I 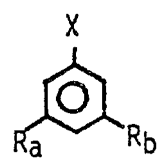

wherein $R_a$ and $R_b$ (which may be the same or different) are H or an *ortho, para* directing activating group for aromatic electrophilic substitution, other than an amine; provided that $R_a$ and $R_b$ are not both H;
X is hydroxy or

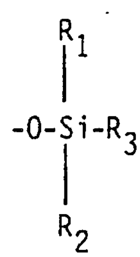

wherein $R_1$ and $R_2$ are H, hydrocarbyl having 1-5 carbon atoms or aryl;
$R_3$ is H, hydrocarbyl, aryl, hydrocarbylaryl or a halogen-substituted derivative thereof;

A (ii) phenol ethers of the formula

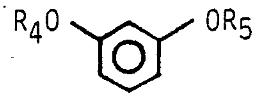

II

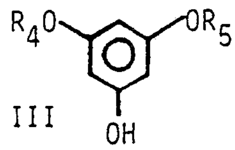

III

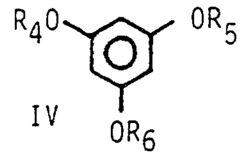

IV

wherein $R_4$, $R_5$ and $R_6$ which may be the same or different are hydrocarbyl, aryl, hydrocarbylaryl, or a substituted derivative thereof;

A (iii) ethers of hydroquinone of the formula

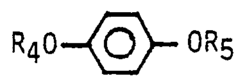

V

wherein $R_4$ and $R_5$ are as defined above;

A (iv) substituted phenol ethers of formula

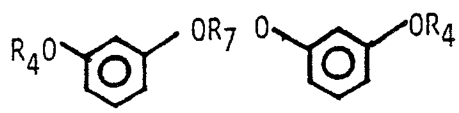

VI

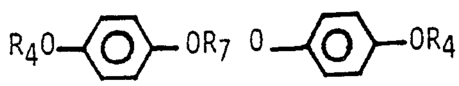

VII

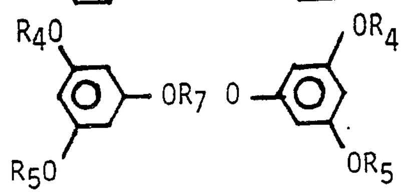

VIII

wherein $R_4$ and $R_5$ are as defined above
and $R_7$ is -C(O)-NH-$R_8$-NH-C(O)-
or -C(O)-$R_8$-C(O)-
wherein $R_8$ is a divalent aliphatic, cycloaliphatic or aromatic group;

A (v) phenolic compounds of the formula

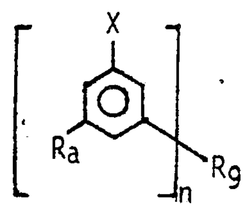

IX

wherein $R_a$ and X are as defined herein
$R_9$ is an n-valent radical and $2 \leq n \leq 4$
a compound B selected from

B (i) formaldehyde; and compounds capable of producing formaldehyde in the presence of an acid;

B (ii) monofunctional aldehydes other than formaldehyde; and compounds capable of producing such aldehydes in the presence of acid

B (iii) multi-functional aldehydes; and compounds capable of producing such aldehydes in the presence of acid;

and a compound C which is a latent acid catalyst;

provided that when compound A is A (ii), compound B is B (i) or B (iii); and when compound A is A (iii), compound B is B (i).

The item "latent acid catalyst" used herein includes a latent acid precursor. Preferably the latent acid catalyst is a material which produces acid on exposure to radiation. However other latent acid catalysts, such as those which produce acid on contact with water or heat may also be used.

In one aspect, the present invention provides a photo curable composition comprising (A) a dihydric or trihydric phenolic compound having unsubstituted ortho or para positions, (B) an aldehyde and/or a compound capable of producing an aldehyde in the presence of an acid, and (C) a material which produces acid on exposure to radiation. In this aspect, "phenolic compound" means a phenol or a compound containing a phenolic group which has not been condensed with an aldehyde. In this aspect, the phenolic compound may be substituted e.g. with 1 or 2 alkyl groups preferably having 1-10 carbon atoms, more particularly 1-5 carbon atoms.

When $R_a$ or $R_b$ is an ortho, para directing activating group for aromatic electrophilic substitution, it may suitably be -OH, hydrocarbyl, aryl, hydrocarbyloxy or amide of the formula $R_{10}$ $C(O)NH_2$- where $R_{10}$ is hydrocarbyl or aryl, or a substituted derivative thereof. Preferably at least one of $R_a$ and $R_b$ is -OH.

The aryl groups in any of the compounds A may be substituted with one or more of the substituents mentioned in the preceding paragraph, provided that the aryl group has 2 unsubstituted ortho or para positions.

Preferably the proportions of compound A calculated as free phenol to compound B calculated as free aldehyde (-CHO) are in the ratio of molar concentration

$$0.05 \leq \frac{[\text{Phenol}]}{[\text{-CHO}]} \leq 5.00$$

Particularly preferred ratios are in the range

$$0.1 \leq \frac{[\text{Phenol}]}{[\text{-CHO}]} \leq 1.0$$

In the compound A the hydrocarbyl groups preferably contain from 1 to 16 carbon atoms, more preferably from 1 to 5 carbon atoms and the aryl and hydrocarbylaryl groups preferably have from 6 to 24 carbon atoms, more preferably from 6 to 10 carbon atoms. Hydrocarbyl groups are preferred, especially alkyl or alkenyl groups. A substituted derivative of the foregoing may suitably be substituted with one or more halo groups. Halogen may be chlorine, bromide, fluorine or iodine.

The phenols and other phenolic compounds A (i) and A (ii) may be di-, or trihydric, particularly 1,3-dihydric. A particularly preferred compound A is resorcinol. However compounds in which a plurality of phenol groups are joined by $-CH_2-$ groups at ortho and/or para positions on the phenol (i.e. compounds formed by condensation of a phenolic group with an aldehyde) are excluded as starting materials.

It is important that the compound A does not contain any group which is sufficiently basic to inhibit the acid-catalysed conversion of the compounds capable of producing aldehydes on exposure to acid. Examples of unsuitable compounds are those containing an amine or a pyridine group, e.g. phenols linked by a polyvinyl pyridine residue or a polyamine residue.

The silyl derivatives (compounds A (iii)) and the ethers (compounds A (iv), (v) and (vi)) are advantageous compared to the phenols and other phenolic compounds because of their greater solubility in commercially available aldehydes and aldehyde precursors. Also they are safer to handle than free phenol.

In the compounds of formula IX, $R_9$ may be a hydrocaryl, aryl or hydrocarbyloxy residue and may contain ester, urethane, amide, siloxane, or phosphazine groups. $R_9$ may be unsubstituted or substituted with one or more substituents other than amine or pyridine groups.

The aldehyde B may be either aromatic or aliphatic. A multifunctional aldehyde B (iii) may have two or more aldehyde groups. Materials which produce aldehydes in the presence of acid are preferably polyaldehydes or acetals but excluding unsaturated cycloacetal radicals. Particularly preferred are acetaldehyde trimer (paraldehyde) and formaldehyde trimer (trioxane). Trimers and acetals are particularly preferred because they are more stable than aldehydes during storage.

Suitable acetals are formed by reaction of aldehydes with monohydric, di-hydric or polyhydric alcohols, which may be aliphatic, cycloaliphatic or aromatic.

The latent acid catalyst (compound C) is preferably a material which generates acid on exposure to radiation, particularly a material which is activated by ultraviolet or visible radiation in the wavelength range 200 to 800 nm. Such materials include diazonium salts (*); iodonium and idosyl salts (*); sulphonium and sulphoxonium salts (*); pi-arene metal complexes (*); tris-beta-diketone aluminium complexes with triarylsilylperoxides or o-nitrobenzyl(triarylsilyl)- ethers (* See Li Bassi, Photoinitiators of Polymerization: Recent Developments and Evolution, J. Rad. Curing. July 1987, 18-31); alpha-sulphonyloxy esters (U.S. Patent No. 4510290); beta-sulphonyloxy esters (U.S. Patent No. 4504372); oxime sulphonates (U.S. Patent No. 4540598); quinolinium sulphonates (U.S. Patent No. 4431774) and pyrylium salts (Irish Patent Application No. 2158/85).

However materials which generate acid on exposure to heat or to moisture are also suitable. Such materials include for example the dicarbonyl chelates of main row elements of groups IIIA-VA described in U.S. Patent 4,116.886 Cella, which are moisture sensitive; diazonium salts described in U.S. Patent 3,936,557 Watt, which are activatable by heat or radiation; polyalkylpiperidinesulphonic acid esters described in U.S. Patent 4,537,923 Slongo et al; and iodonium salts described in U.S. Patent 4,173,551 Crivello, which are activatable by heat.

Preferably the cationically curable compositions comprise between 0.01% and 10% by weight of the latent acid catalyst. Particularly preferred cationically curable compositions comprise between 1% and 5% by weight of the acid-generating material.

The compositions of the present invention are simpler to produce than the composition of EP-10897-A since the individual phenolic compounds and the aldehydes or the aldehyde-producing compounds do not have to be condensed. In addition, these materials have low viscosity and are relatively easy to handle.

In many conventional photocurable compositions a chemical marker must be included to indicate that curing has taken place. However, in many cases the dyestuffs or pigments used can prevent photo-curing. A further advantage of the composition of the present invention is that a colour develops naturally on curing without the need to add a dyestuff.

The compositions of the present invention can be stored and applied in the liquid condition and can then be cured rapidly from a liquid to a solid tack-free state, in which the product is insoluble in common organic solvents. They have good storage stability, the length of which is dependent on the latent acid catalyst employed. They are potentially useful for adhesives, sealants and surface coating applications, in particular. The products are potentially advantageous due to their good resistance to high temperatures and acids, their good dielectric properties and the relatively low cost of the starting materials.

The present invention will now be described in greater detail with reference to the following Examples.

## EXAMPLE 1

A cloudy solution of 28.0g of sodium hexafluoroantimonate in 300 ml of water was added to a stirred solution of 29.9g of triphenylsulfonium chloride in 29.9g water at 70°C. An oil immediately preciptated which solidified on cooling. The water was removed to yield 45.33g of triphenylsulfonium hexafluoroantimonate to which an equal weight of propylene carbonate was added. The solution was filtered to remove a slight insoluble component and to clarify the mixture.

## EXAMPLE 2

A photosensitive composition was prepared by blending together the following components:

| | |
|---|---|
| Resorcinol | 1.10g |
| 40% Aqueous formaldehyde solution | 1.00ml |
| 50% Triphenylsulfonium hexafluoroantimonate soln. (Example 1) | 0.16g |

An approximately 1mm deep coating was prepared on a glass slide and exposed to ultra-violet light from a medium pressure mercury arc lamp operating at 200W per inch (UVA LAoc 1000, supplied by Loctite Deutschland GmbH) for varying exposure times. The coatings were placed 20cm directly under the light source and were found to harden after a short period of irradiation as follows:

| | |
|---|---|
| 10 Sec Exposure ............. | No change |
| 20 Sec Exposure ............. | Dry skin on surface of coating had formed. |
| 30 Sec Exposure ............. | Fully cured, hard, pink coloured solid polymer had formed. |

The solid formed after 30 sec exposure was found to be insoluble in common organic solvents.

EXAMPLE 3

1.10g of resorcinol and 1.32g of paraldehyde were heated to give a clear solution. 0.13g of cationic photocatalyst UVI 6990 (Union Carbide) was then added to the cooled solution. Coatings of the composition were prepared and irradiated with UV light as described in Example 2. The results obtained were as follows:

| | |
|---|---|
| 10 Sec Exposure ............. | Surface had cured (skinned) with liquid underneath which cured to a soft yellow material after 1 hour under ambient conditions. |
| 20 Sec Exposure ............. | Cured through bulk to give a slightly soft yellow coating which converted to a hard film after standing 1 hour under ambient temperature and lighting conditions. |
| 30 Sec Exposure ............. | Cured to a hard, yellow blistered material which was found to be insoluble in common solvents. |

EXAMPLE 4

A photosensitive composition was prepared by blending together the following materials:

| | |
|---|---|
| Resorcinol | 1.0g |
| Benzaldehyde | 1.0g |
| GE1014 (UV photocatalyst, General Electric Corp.) | 0.1g |

Coatings of the composition were prepared and irradiated with UV light as described in Example 2. The following results were obtained:

| | |
|---|---|
| 30 Sec Exposure ............ | Brown colour developed, surface had cured to dry film but liquid remained underneath. This remaining liquid had hardened after standing for 48 hours under ambient lighting and thermal conditions. |
| 60 Sec Exposure ............ | Dry, black, brittle solid had formed which was found to be insoluble in dichloromethane solvent. |

EXAMPLE 5

Potassium carbonate (69g, 0.5M) was slowly dispersed in a solution of resorcinol (22.0g, 0.2M) in acetone (200 mls). Allyl bromide (50.82g, 0.42M) was added dropwise over 15 minutes to the stirred mixture. After 20 hours at room temperature the mixture was refluxed for 3 hours, cooled and filtered. The solvent was removed under reduced pressure to yield 35.8g of crude product which was purified by vacuum distillation to yield 1,3-diallyloxybenzene (28.0g, 74%), b.p. 84-92 °C at 1.3m bar, which contained minor quantities of 3-allyloxyphenol as an impurity.

EXAMPLE 6 (Comparative Example)

A liquid photosensitive composition was prepared by blending together the following ingredients:

| | |
|---|---|
| 1,3-diallyloxybenzene (example 5) | 1.0g |
| paraldehyde | 0.4g |
| photocatalyst GE1014 | 0.05g |

A thin coating of the composition approximately 0.5 mm film thickness was prepared on a microscope glass slide and exposed to ultraviolet (UV) light from a medium pressure mercury arc lamp operating at 200 W per inch (UVA LÖC 1000 W supplied by Loctite Deutschland GmbH). The coated slide was located 20 cms directly under the arc. After 3 minutes exposure the composition had converted to a black-brown coloured viscous resin which was found to be soluble in acetone. This Example did not result in a cross linked solid product.

EXAMPLE 7 (Comparative Example)

A liquid photosensitive composition was prepared by blending together the following materials:

| | |
|---|---|
| 1,3-dimethoxybenzene | 1.0g |
| paraldehyde | 0.4g |
| photocatalyst GE1013 | 0.05g |

A thin coating of the composition was prepared and irradiated as described in Example 6. After 4 mins. exposure the composition had converted to a black-brown coloured viscous resin which was found to be soluble in acetone. This Example did not result in a cross linked solid product.

## EXAMPLE 8

A liquid photosensitive composition was prepared by blending together the following materials:

| | |
|---|---|
| 1,3-diallyloxybenzene | 1.0g |
| trioxane | 0.4g |
| photocatalyst GE1014 | 0.05g |

A thin coating of the composition was prepared and irradiated as described in example 6. After 3 minutes exposure the composition had changed to a black coloured brittle solid which was found to be insoluble in acetone.

## EXAMPLE 9

A liquid photosensitive composition was prepared by blending together the following ingredients:

| | |
|---|---|
| 1,3-diallyloxybenzene | 1.0g |
| 1,8-octanedial | 0.4g |
| photocatalyst GE1014 | 0.02g |

A coating of the composition approximately 0.25 mm film thickness was prepared on a glass slide and irradiated with UV light for 4 minutes as described in example 6. After this time the composition had changed to a brown solid which was insoluble in acetone.

## EXAMPLE 10

A liquid photosensitive composition was prepared by blending together the following components:

| | |
|---|---|
| resorcinol | 1.0g |
| 1,8-octanedial | 1.0g |
| GE1014 | 0.04g |

A coating of the composition was prepared as described in example 9 and irradiated with UV light as described in example 6. After 1 minute exposure the coating had been converted to a dry, cured film which was insoluble in acetone.

## EXAMPLE 11

Bis-1,3-(trimethylsiloxy) benzene was prepared by known method (Langer et. al. J. Org Chem 1958 23, 50). A formulation consisting of bis-1,3-(trimethylsiloxy) benzene (1.0g), paraldehyde (1.0g) and the photoinitiator (UVE-1014) was prepared. Samples of this formulation were spread onto glass slides and

irradiated under UV light (80 mW/cm$^2$) for 10 seconds to give a solid tack-free acetone-insoluble product.

EXAMPLE 12

A formulation consisting of bis-1,3(trimethylsiloxy)benzene (2.5g), trioxane (0.9g) and silicon tetrachloride was prepared. To this formulation was added 0.1g of water with rapid stirring, resulting in a very rapid exothermic polymerization reaction. Silicon tetrachloride is known to produce HCL on contact with water. The solid polymeric product was insoluble in acetone.

EXAMPLE 13

The preparation of the bis urethane of hexamethylene diisocyanate and 3,5-dimethoxy phenol of formula X:

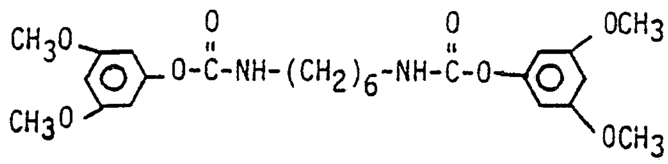

X

3,5-Dimethoxyphenol (6.16g) was added to 1,6 diisocyanatohexane (3.36g) in toluene 30.0 mls with rapid stirring under a nitrogen atmosphere. After one hour the temperature of the reaction mixture was raised to 100° over a two hour period. The reaction had gone to completion (determined by ir analysis) after a twelve hour period. The toluene was removed under reduced pressure giving almost quantitative yield of a high purity solid product (mp = 116° C).

EXAMPLE 14

A formulation containing the bis urethane (X) (4.7g), paraldehyde (2.64g) and the photoinitiator UVE-1014 (0.15g) was prepared. Samples of this formulation were spread onto glass slides and irradiated under UV light 80 mW/cm$^2$ for 30 seconds giving a tack-free acetone-insoluble polymer.

EXAMPLE 15(i)

The preparation of the bisurethane of hexamethylene diisocyanate and 3-methoxyphenol of the formula XI:

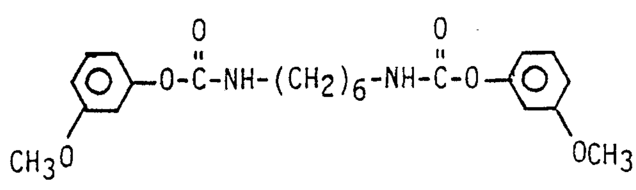

XI

3-Methoxy phenol (7.4g) was added dropwise to a solution of hexamethylenediisocyanate (5.0g) in toluene (50 mls) under a nitrogen atmosphere over a one hour period. The reaction mixture was allowed to stir overnight. The off-white precipitate was filtered and recrystallized from toluene yielding 9.1g (72.5%) high purity product (mp = 97° C).

EXAMPLE 15(ii) (Reference)

A formulation consisting of the bisurethane (XI) described above (0.01 moles) dissolved in the minimum dichloromethane and dioxane (0.02 moles) was prepared. To this formulation methanesulphonic acid (0.1g) was added with stirring resulting in rapid exothermic reaction and the formation of a solid precipitate. This precipitate was also insoluble in acetone. Although a latent acid catalyst was not used in this Example it illustrates the formation of a crosslinked resin from the bisurethane (XI). A similar product could be obtained by use of a latent acid catalyst.

EXAMPLE 16

A formulation containing resorcinol 0.01 Moles and benzaldehyde 0.02 Moles was prepared. To this formulation a thermally latent acid precursor PP-33 (a proprietary diazonium salt formulation supplied by Asahi Denka. Tokyo) 2% by weight was added. This formulation was heated at 85° C for 10 minutes to give a solid resinous material.

EXAMPLE 17

1.4 dimethoxy benzene (6.9g), 1,3,5, trioxane (3.0g), GE 1014 (0.25g) and propylene carbonate (1.4g) were heated with stirring to 50° C. A sample of the solution thus formed was applied to a microscope slide. The sample was irradiated with U.V. light (1000 W lamp. UVALOC). A brown solid material was formed which was found to be insoluble in acetone.

## Claims

1. A cationically curable composition comprising a compound A selected from

A (i) phenols and phenoxy silyl ethers of the formula

I 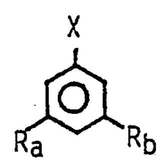

wherein $R_a$ and $R_b$ (which may be the same or different) are H or an ortho, para directing activating group for aromatic electrophilic substitution, other than an amine; provided that $R_a$ and $R_b$ are not both H;
X is hydroxy or

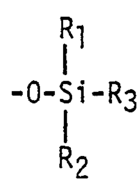

wherein $R_1$ and $R_2$ are H, hydrocarbyl having 1-5 carbon atoms, or aryl;
$R_3$ is H, hydrocarbyl, aryl, hydrocarbylaryl or a halogen-substituted derivative thereof;
A (ii) phenol ethers of the formula

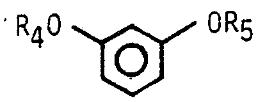
II
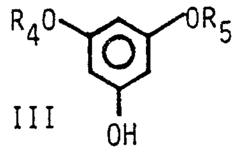
III
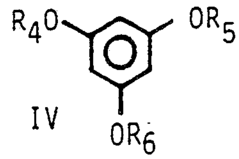
IV

wherein $R_4$, $R_5$ and $R_6$ which may be the same or different are hydrocarbyl, aryl, hydrocarbylaryl, or a substituted derivative thereof;

A (iii) ethers of hydroquinone of the formula

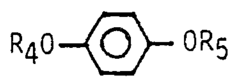

V

wherein $R_4$ and $R_5$ are as defined above;

A (iv) substituted phenol ethers of the formula

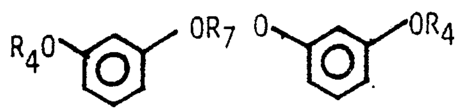
VI

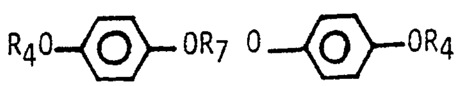
VII

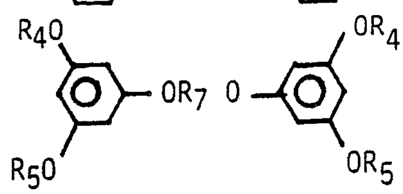
VIII

wherein $R_4$ and $R_5$ are as defined above
and $R_7$ is -C(O)-NH-$R_8$-NH-C(O)-
or -C(O)-$R_8$-C(O)-
wherein $R_8$ is a divalent aliphatic, cycloaliphatic or aromatic group;

A (v) phenolic compounds of the formula

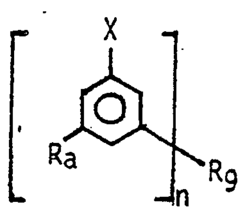
IX

wherein $R_a$ and X are as defined herein
$R_9$ is an n-valent radical and $2 \leq n \leq 4$

a compound B selected from

B (i) formaldehyde; and compounds capable of producing formaldehyde in the presence of an acid;

B (ii) monofunctional aldehydes other than formaldehyde; and compounds capable of producing such aldehydes in the presence of acid

B (iii) multi-functional aldehydes; and compounds capable of producing such aldehydes in the presence of acid;

and a compound C which is a latent acid catalyst;

provided that when compound A is A (ii), compound B is B (i) or B (iii); and when compound A is A (iii), compound B is B (i).

2. A composition as claimed in Claim 1 wherein $R_a$ and/or $R_b$ is selected from -OH, hydrocarbyl, aryl, hydrocarbyloxy, amides of the formula $R_{10}$ C(O)$NH_2$- where $R_{10}$ is hydrocarbyl or aryl, and substituted derivatives of all the foregoing.

3. A composition as claimed in claim 2 wherein the compound A (i) is resorcinol.

4. A composition as claimed in Claim 1 wherein $R_8$ or $R_9$ is selected from hydrocarbyl, aryl or hydrocarbyloxy residues, optionally containing ester, urethane, amide, siloxane or phosphazene groups.

5. A composition as claimed in claim 1 wherein the hydrocarbyl group in a compound A is an alkyl or alkenyl group having 1 to 5 carbon atoms.

6. A composition as claimed in claim 1 wherein the compound B is a polyaldehyde or acetal but excluding unsaturated cycloacetal radicals.

7. A composition as claimed in claim 6 wherein the polyaldehyde is an aldehyde trimer.

8. A composition as claimed in claim 1 wherein the latent acid catalyst is a material which produces acid on exposure to radiation.

9. A composition as claimed in claim 10 wherein the material which generates acid on exposure to radiation is activated by ultraviolet or visible radiation in the wavelength range 200 to 800 nm.

10. A composition as claimed in claim 11 wherein the acid-generating material is selected from diazonium salts; iodonium and idosyl salts; sulphonium and sulphoxonium salts; pi-arene metal complexes; tris-beta-diketone aluminium complexes with triarylsilylperoxides or o-nitrobenzyl (triarylsilyl) ethers; alpha-sulphonyloxy esters; beta-sulphonyloxy esters; oxime sulphonates; quinolinium sulphonates and pyrylium salts.

11. A composition as claimed in Claim 1 wherein the proportion of compound A calculated as free phenol to compound B calculated as free aldehyde (-CHO) is in the ratio of molar concentrations

$$0.05 \leq \frac{[\text{Phenol}]}{[\text{-CHO}]} \leq 5.00$$

12. A composition as claimed in Claim 11 wherein the ratio is in the range

$$0.01 \leq \frac{[\text{Phenol}]}{[\text{-CHO}]} \leq 1.0$$

13. A photocurable composition comprising (a) a dihydric or trihydric phenolic compound having unsubstituted ortho or para positions, (b) an aldehyde and/or a compound capable of producing an aldehyde in the presence of an acid, and (c) a material which produces acid on exposure to radiation.

14. A photocurable composition comprising (A) resorcinol, (B) an aldehyde and/or a compound capable of producing an aldehyde in the presence of an acid, and (C) a material which produces acid on exposure to radiation.

00309271.

I

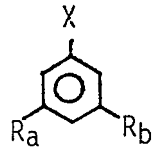

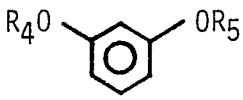

II

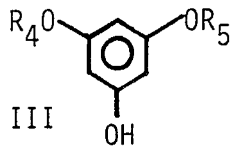

III

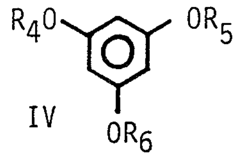

IV

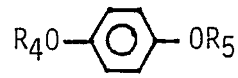

V

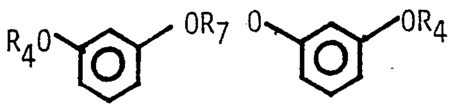

VI

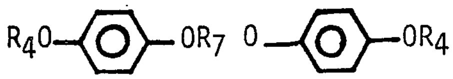

VII

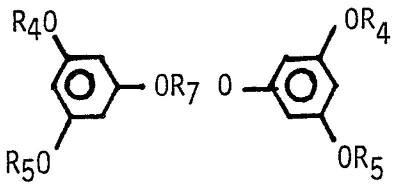

VIII

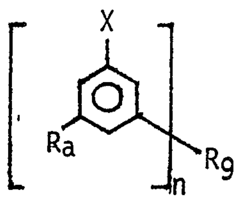

IX

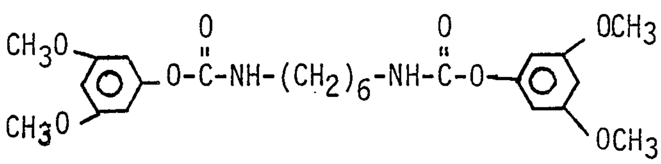

X

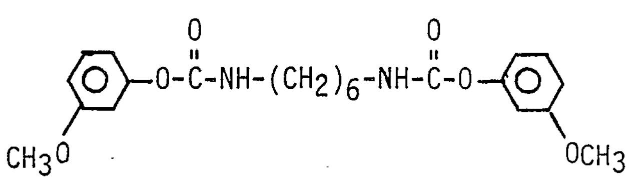

XI